# EUROPEAN PATENT APPLICATION

(11) **EP 4 764 887 A1**
(43) Date of publication of application: **24.06.2026**
(21) Application number: 25223073.5
(22) Date of filing: 12.12.2025
(51) Int. Cl.: G06F 16/3332

(54) **SYSTEM FOR PROCESSING INPUT DATA, METHOD FOR IMPROVING HUMAN-MACHINE INTERACTION, AND COMPUTER-READABLE MEDIUM**

(30) Priority: 19.12.2024 US 202418987053
(71) Applicant: moresophy GmbH, 81379 München (DE)
(72) Inventor: BEIER, Heiko, 81541 München (DE); SCHMIDT, Christoph, 81377 München (DE)
(74) Representative: Zimmermann & Partner Patentanwälte mbB

(57) **Abstract**

A system for processing input data is disclosed. In one example, the system includes one or more processors, an analytical artificial intelligence module that is, when executed by at least one of the one or more processors, configured to determine metadata for the input data. The system includes a prompting module that is, when executed by at least one of the one or more processors, configured to determine, based at least on a part of the metadata, a prompt, and a generative artificial intelligence module that is, when executed by at least one of the one or more processors, configured to determine, based on the prompt, output data.

## Description

### TECHNICAL FIELD

Embodiments of the present invention relate to systems for processing input data and methods for improving human-machine interaction, in particular in the field of artificial intelligence.

### BACKGROUND

Generative artificial intelligence (AI) uses generative (statistical) models to produce new output, such as text, images, or even videos, for an input in the form of a so-called prompt, in particular a natural language prompt. Not least due to recent developments of transformer-based deep neural networks, in particular large language models (LLMs), and increasing available computing power e.g. using modem GPUs, generative AI systems are meanwhile widely used, also in industries such as software development, healthcare, customer service, and product design. A large number of generative AI models (GAIMs) have already been developed. Examples of generative AI systems are text-to-text artificial intelligence generation systems, for example chatbots such as ChatGPT, and text-to-image artificial intelligence generation systems such as Stable Diffusion.

Generative AI systems (GAIs) are particularly suitable for use cases such as question answering, text summarization and content creation. The generated output should be precise and reliable. Furthermore, for use in industries, the connection with company data is often of particular importance.

The quality of the generated output depend on the generative model, the training of the generative model, in which the generative model is trained to provide a detailed response upon receiving an instruction in a prompt, and the prompts with which the trained model is fed to generate new output.

Many GAIMs, in particular LLMs, are very sensitive to variations in formatting, structure, and linguistic properties of the prompt. To improve the generated output, prompt engineering techniques may be used. Meanwhile a plurality of prompt engineering techniques are known. One example is the so-called Chain-of-thought (CoT) prompting. CoT may allow LLMs to solve a task in intermediate steps. In another example, a further LLM is used to

(iteratively) beam search over prompts for a target LLM until a stopping criteria, which is based on the log-likelihood of the generated outputs, is reached. In still another example, gradient descent is used to search for prompts maximizing the log-likelihood of the outputs of the target LLM.

However, not at least because part of how GAIMs work is still a kind of black box, prompt engineering (determining (most) effective prompts guiding the GAIM), remains challenging. In particular, selecting the prompt engineering technique that appears most promising for a given task and a given generative model and/or fine tuning usually requires a great deal of expertise and experience on the part of the users.

Accordingly, there is a need to further improve the output of generative AI systems as well as the interaction of users with GAIMs.

### SUMMARY

According to an embodiment of a system for processing input data, the system includes one or more processors, an analytical artificial intelligence module that is, when executed by at least one of the one or more processors, configured to determine metadata for the input data, a prompting module that is, when executed by at least one of the one or more processors, configured to determine, based at least on a part of the metadata, a prompt, and a generative artificial intelligence module that is, when executed by at least one of the one or more processors, configured to determine, based on the prompt, output data.

### BRIEF DESCRIPTION OF THE DRAWINGS

The components in the figures are not necessarily to scale, instead emphasis being placed upon illustrating the principles of the invention. Moreover, in the figures, like reference numerals designate corresponding parts. In the drawings:
Fig. 1 is a block diagram schematically illustrating a system for processing input data, processes of a corresponding method, and a non-volatile computer-readable medium according to embodiments;
Fig. 2 is a block diagram schematically illustrating a system for processing input data and processes of a corresponding method according to embodiments;
Fig. 3 is a block diagram schematically illustrating a system for processing input data and processes of a corresponding method according to embodiments;
Fig. 4 is a block diagram schematically illustrating a system for processing input data and processes of a corresponding method according to embodiments;
Fig. 5A is a block diagram schematically illustrating a system for processing input data and processes of a corresponding method according to embodiments;
Fig. 5B is a flow chart of a method for improving human-machine interaction according to embodiments;
Fig. 6A - to Fig. 7B illustrate graphical user interfaces and a method for improving human-machine interaction according to embodiments;
Fig. 8A and Fig. 8B illustrate further graphical user interfaces and methods for improving human-machine interaction according to embodiments; and
Fig. 9 illustrates yet another graphical user interface and a method for improving human-machine interaction according to embodiments.

### DETAILED DESCRIPTION

According to an embodiment of a system for processing input data, the system includes one or more processors, an analytical artificial intelligence module that is, when executed by at least one of the one or more processors, configured to determine metadata for the input data, a prompting module that is, when executed by at least one of the one or more processors, configured to determine, based at least on a part of the metadata, a prompt, and a generative artificial intelligence module that is, when executed by at least one of the one or more processors, configured to determine, based on the prompt, output data.

As the prompt for the generative artificial intelligence module is generated based on the metadata, which are determined by analysing the input data with analytical artificial intelligence, the output data that are generated by the generative artificial intelligence module receiving this prompt is, at least on average, expected to be improved in quality, in particular compared to output data resulting from prompts of a normal user without deep knowledge in prompt engineering. In addition, a user needs to have profound knowledge in the subject matter domain in order to be able to verify that the output is correct (based on valid input data).

The system is typically a hybrid artificial intelligence system with two different artificial intelligence modules, i.e. a first artificial intelligence module for analysing the input data (analytical artificial intelligence module) and a second (more generic and/or larger) intelligence module for generating the output data (generative artificial intelligence module), a networking system, at least partially cloud-based and/or includes one or more servers.

Within this specification between analytical artificial intelligence modules (AAIMs) and generative artificial intelligence modules (GAIMs) is differentiated. While the latter are typically based on large models, e.g. using transformer technique such as large language models, the former are typically based on more traditional machine learning techniques such as feedforward networks. While GAIMs are expected to be superior in generating and synthesizing data, analytical artificial intelligence (AAIMs) is expected to excel in reliability, transparency and energy efficiency.

Suitably combining an AAIM with a GAIM as suggested herein, allows the strengths of both modules to be combined: for specific analyzing tasks, a (specialized) AAIM can be used, which is much more efficient than the GAIM for these tasks, and the GAIM can be used where capabilities are required that the analytical models cannot provide, at least not in the desired quality. Technically, this is achieved by typically dynamically integrating/injecting the results of the AAIM into prompts to control the GAIM. As a result, an (energy) efficient, reliable, transparent and user-friendly AI system can be provided.

Furthermore, respective functionalities may be implemented in containers.

Within this specification the term(s) "artificial intelligence module(s)" shall embrace any implementation of "artificial intelligence model(s)".

At least one of, preferably both the analytical artificial intelligence module (AAIM) and the generative artificial intelligence module are based on machine learning (ML) and/or are implemented as respective ML-based modules.

Determining the metadata typically includes at least one of, typically several of the following processes:
o receiving the input data, in particular from a user and/or from or via an interface, in particular a user input interface such as a graphical user interface,
o linguistic processing of the (received) input data,
o determining, for the (received) input data, a metadata request,
o determining, for the input data and the determined metadata, if further metadata and/or further input data are required, and, if so, determine a corresponding further metadata request and/or a corresponding further input data request,
o determining, based on the metadata, a user feedback request,
o generating a user input interface for the user feedback request,
o displaying the user input interface, in particular on a display,
o receiving a user feedback from the user input interface,
o determining, based on the user feedback, further metadata,
o send at least a part of the metadata and/or the further metadata to the prompting module, and
o receiving at least one of the input data and the further input data, in particular respective user input data.

These processes may be carried out by one or more preprocessing modules of the analytical artificial intelligence module.

Furthermore, determining the metadata typically includes at least one of, typically several of the following processes:
o determining weights for the metadata,
o determining respective sets of metadata, each set comprising at least two metadata entries and a weight for each of the least two metadata entries,
o determining the respective metadata in accordance with the respective metadata request,
o searching for the respective metadata in a content database typically comprising weighted metadata,
o searching for the respective metadata in a metadata database comprising previously determined metadata, and
o determining the respective metadata based on a local or remote content, in particular based on webpages provided in a network such as the World Wide Web (WWW) and/or based on a product-related and/or service-related database that may be provided by or for a user.

These processes may be carried out by an analytical artificial intelligence metadata generating module of the analytical artificial intelligence module.

Determining the respective metadata based on a product-related and/or service-related database provided by or for a user facilitate a better alignment of the output data with the user data / company data.

According to an embodiment, which can be combined with other embodiments described herein, determining metadata to be used for determining the prompt includes determining, based on the determined metadata, in particular on weights of the metadata, if further input data are required, and, if so, sending a further input data request to the interface, receiving the further input data via or from the interface, and determining the prompt based on the metadata, further metadata determined for the received further input data, and at least one of the received input data and the received further input data.

Accordingly, the interaction of users with generative artificial intelligence modules/systems/models (such as an LLM) can be improved and/or can be explained and/or a more specific output and/or an output that better meets the expectations of the users (higher output quality) can be achieved. In particular, the interaction of users with the generative artificial intelligence modules/systems/models can be made more reliable. This is because the user initiated processes can be controlled by verified data from a transparent stream of input data instead of using in-transparent data from a hidden layer of the LLM / GAIM).

Even compared to retrieval-augmented generation (RAG) used so far, which is a two-phase process involving document retrieval and answer formulation by an LLM, a higher output quality can be achieved. This is due to (weight-based) filtering and reranking of found documents, and parts thereof, respectively. In particular, the filtering and reranking can be controlled by means of metadata generated by AAIMs, which can be tailored to produce high-quality metadata fitting the purpose of the application (user request).

According to an embodiment, which can be combined with other embodiments described herein, the system includes a search sub-module which is configured to search for documents based on the metadata.

In this embodiment, the prompting module is typically configured to determine the prompt, based on at least one document found by the search sub-module or a part of the at least one document.

As used herein, the term "metadata" intends to describe structured data that provide information about characteristics of data. Metadata may in particular provide context information from underlying input data. Metadata helps to describe, explain, locate, or otherwise make the data easier to retrieve, use, or manage.

The metadata may be at least one of: a user intent, a user sentiment, semantic metadata related with the input data, and content metadata for a content of the input data, in particular numeric data such as numbers and quantities in the content, a category of the content or a topic of the content, a concept related with the content and/or the category, at least one keyword such as an entity related with the content, the concept and/or the category, in particular a user or customer-specific entity such as a name, and/or at least one relevant phrase related with the content, the concept and/or the category, and/or numerical data or numerical values, in particular numerical data or numerical values of measurables or countable objects found in the input data, e.g. numerical data or numerical values of physical, chemical and/or geometric quantities (values/variables) such as a distance, a temperature, a pressure, a melting point or a concentration, and/or an aggregation of the numerical data or numerical values.

The search sub-module may in particular be configured to at least one of: searching for the documents based on different metadata, in particular on first metadata, which refer to a user intent and/or sentiment, and on second metadata, which refer to a content of the input data, performing a neural search for documents based on the input data, in particular a question extracted from the input data, and determining, based on the metadata, a weight for any document found by the search sub-module. The first metadata may also include, be and/or be considered as user-related metadata, and the second metadata may also include, be and/or be considered as content-related metadata. In a preferred embodiment, the search sub-module is configured to search for documents based on user-related metadata and content-related metadata.

While the first metadata typically refer to a user intent or a user sentiment (user-related metadata), the second metadata (content-related metadata) can also refer to (describe and explains) quantitative characteristics of the input data based on mathematical operations performed on the second metadata to support answering questions that include information about numbers (size, dimensions, anomalies, etc.) that can only be derived from aggregations (over the full stream of the content) of the input data. Accordingly, the system can also provide improved/correct output data which can only be obtained based on numerical calculations.

Accordingly, the prompting module is typically configured to determine the prompt based on the first metadata, the second metadata, at least a part of the input data, and at least one document found by the search sub-module or a part thereof.

The prompting module may in particular be configured to include at least a part of the first metadata, at least a part of the second metadata, at least a part of the input data, and at least a part of at least one document found by the search sub-module into the prompt.

Furthermore, the number of found documents which are further used to determine the prompt is delimited. Accordingly, the energy consumption/number of tokens required for determining the desired output data is reduced.

In particular, only a subset of the found documents may be selected for further processing based on the weights of the documents.

Typically, the prompt includes both at least a part of the metadata and at least a part of the input data.

According to an embodiment, which can be combined with other embodiments described herein, determining the prompt (typically by the prompting module) includes:
o selecting metadata to be included into the prompt,
o including, based on weights of the metadata, the weights typically being determined by the analytical artificial intelligence module, metadata into the prompt,
o including at least a part of the metadata into the prompt,
o including at least a part of the input data into the prompt,
o filter the metadata,
o filter the input data,
o including the filtered metadata into the prompt,
o including the filtered input data into the prompt, and
o generating the prompt based on a selected uses case, in particular a uses case selected by the user (via the user interface).

Typically, concepts embrace mental representations, abstract objects or abilities that make up the fundamental building blocks of thoughts and beliefs. Within this specification the term "concept" is used in a semantic sense and intends to describe an aggregation of terms and/or words including synonyms and abbreviations. In other words, a "concept" typically includes several semantically similar words and terms, respectively, which are used by humans to express any kind of thought, fact or cognition in natural language.

Within this specification the term "term" is intended to describe a word that has meaning (semantics) and most often refers to objects, ideas, events or a state of affair.

Concepts can either be abstract terms like "virus", "chocolate" or "product development" but also named entities referring to physical objects like persons ("Alfred Einstein"), organisations ("United Nations"), places ("Rome" or "Asia" or "Pacific Ocean") or products ("iPhone" or "skim milk") or any other kind and class of physical entities that can be referenced by its respective name.

Using concepts (aggregated terms and words) instead of terms and words substantially improves performance as the huge number of terms and words used in languages can be mapped to a reduced number of concepts.

The use of linguistic processing strongly increases the recall of assigning relevant concepts to content without requiring these implicit concepts to appear inside the content in exact the same way as explicit concepts. Implicit concepts may be morphologically different and/or distributed within a sentence or paragraph as word(s)/terms/phrases describing the concept.

The analytical artificial intelligence module may have intent analysis capability, sentiment analysis capability, emotion analysis capability, semantic analysis capability and/or a natural language processing (NLP) capability. Alternatively or in addition, the analytical artificial intelligence module is based on and/or implements a knowledge model, in particular a semantic knowledge graph.

The analytical artificial intelligence module, in particular the analytical artificial intelligence metadata generating module typically includes a user intent analyzing sub-module, which is configured to determine the first metadata for the input data, and at least one data analyzing sub-module, which is configured to determine the second metadata for the input data different to the first metadata. In particular, the analytical artificial intelligence module may include a qualitative analytical artificial intelligence sub-module and/or a quantitative analytical artificial intelligence sub-module, preferably both analytical sub-modules.

The input data typically include a user request or question, for example a user generated prompt.

Alternatively or in addition, the input data typically include a document, in particular a document about a product or a service, product-related data and/or service-related data.

Preferably, the qualitative analytical artificial intelligence sub-module is configured to identify a category of the content, a topic of the content, and an entity of the content.

Likewise the quantitative data analyzing sub-module is preferably configured to identify quantitative aspects of the input data, in particular numerical data or numerical values of the input data (e.g. from tables, images and/or raw data of the input data, e.g. using image analysis techniques etc.) and/or quantitative aspects of a question of the input data (the user) including question intents like "how many", "most" or "least". In addition, the quantitative data analyzing sub-module(s) may be configured to determine results from mathematical operations performed on the second metadata to generate further second metadata.

According to an embodiment, which can be combined with other embodiments described herein, the input data include or even are input textual data and the output data include or even are output textual data.

In this embodiment, the generative artificial intelligence module is typically based on or even implements a transformer-based artificial intelligence such as a Large Language Model. However, other architectures such as a recurrent neural network (RNN) architecture like Long short-term memory (LSTM) or even extended LSTM (xLSTM) may also be used.

The system is typically configured to output the output data.

Furthermore, the system is typically configured to display at least a part of the output data, in particular on a display of the system.

According to an embodiment, which can be combined with other embodiments described herein, a method, in particular a method for improving human-machine interaction includes feeding input data to an analytical artificial intelligence module for determining metadata for the input data, feeding at least a part of the metadata to a prompting module for determining a prompt for the input data, and feeding the prompt to a generative artificial intelligence module for determining output data for the input data.

Other embodiments include corresponding computer-readable storage media or devices, and computer programs recorded on one or more computer-readable storage media or computer storage devices, each including code (instructions) for performing the processes of the methods described herein.

In particular, a computer program product and/or a computer-readable storage medium may include instructions which, when executed by a one or more processors of a system, in particular data processing system (also referred to as information processing system) connectable to network, cause the system to carry out the processes of the methods described herein.

The system of and/or including one or more computers and/or processors can be configured to perform particular operations or processes by virtue of software, firmware, hardware, or any combination thereof installed on the one or more computers and/or processors that in operation may cause the system to perform the processes.

Those skilled in the art will recognize additional features and advantages upon reading the following detailed description, and upon viewing the accompanying drawings.

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

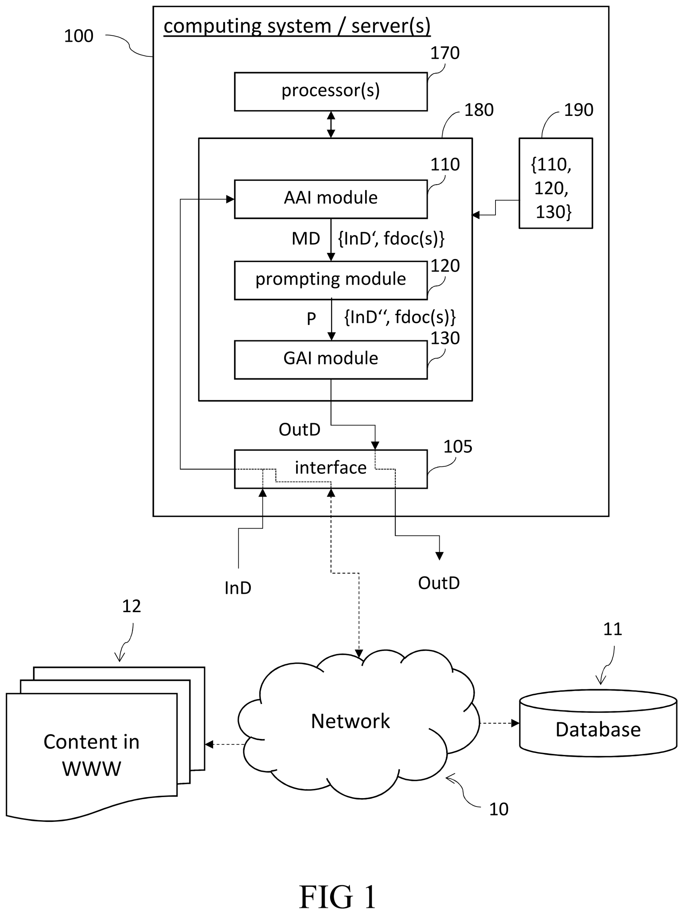

Fig. 1 illustrates in a block diagram a computing system 100 and processes for processing input data InD as well as a non-volatile computer-readable medium 190.

In the exemplary embodiment, system 100 has at least one processor 170 such as a CPU, a GPU or a Neural Processing Unit (NPU), typically a plurality of processors. One or more of the processors may be a multicore or manycore CPU, CPU(s) with a GPU(s) or CPU(s) with NPU(s).

Furthermore, exemplary system 100 has a communication interface 105 for receiving the input data InD from a user as well as for other communication purposes, in particular for searching in a content 12 of the WWW such as webpages and/or in one or more (remote or local) contend databases 11, in particular document-related database(s), product-related database(s) and/or service-related database(s), such as a respective company database.

Communication interface 105 may in particular includer or even be a network interface for a network 10.

The system 100 may be implemented as or include one or more servers connected to network 10 and/or with each other, e.g. via network 10.

As illustrated in Fig. 1, system 100 may have a volatile memory 180, which may also be a distributed memory, into which three software modules 110, 120, 130 are (at least partially) loaded from a non-volatile computer-readable medium 190 storing respective computer instructions for executing by the at least one processor 170.

The three software modules 110, 120, 130 may be implemented in respective containers.

When running, an analytical artificial intelligence (AAI) module 110 of the three software modules 110, 120, 130 can determine metadata MD for the input data InD.

Based on the metadata MD, a running prompting module 120 of the three software modules 110, 120, 130 can determine a prompt P.

The prompt P can be fed to a running generative artificial intelligence (GAI) module generating output data OutD in accordance with the prompt P.

Typically, the output data OutD are further processed, stored and/or presented to the user, in particular on a graphical interface that may also be used for interacting with the user, in particular for inputting the input data as well as requesting (by AAI module 110) and receiving (at AAI module 110) further information from the user.

As indicated by the upper curly bracket {} in Fig. 1, (running) prompting module 120 typically receives (at least) a part InD' of the input data InD and/or one or more document relevant fdoc(s) found in the content 12 and/or in the database(s) 11 by the AAI module 110 and a search sub-module of AAI module 110, respectively, during determining the metadata MD.

As indicated by the lower curly bracket {} in Fig. 1, the generated prompt P can be determined based on the input data InD or the part InD' thereof, and, optionally, on the one or more found documents fdoc(s). Accordingly, the generated prompt may include at least information InD" of the input data InD or the part InD' thereof, and/or one or more document fdoc(s) or respective (relevant) parts thereof, in particular chunked does such as paragraph-wise split docs.

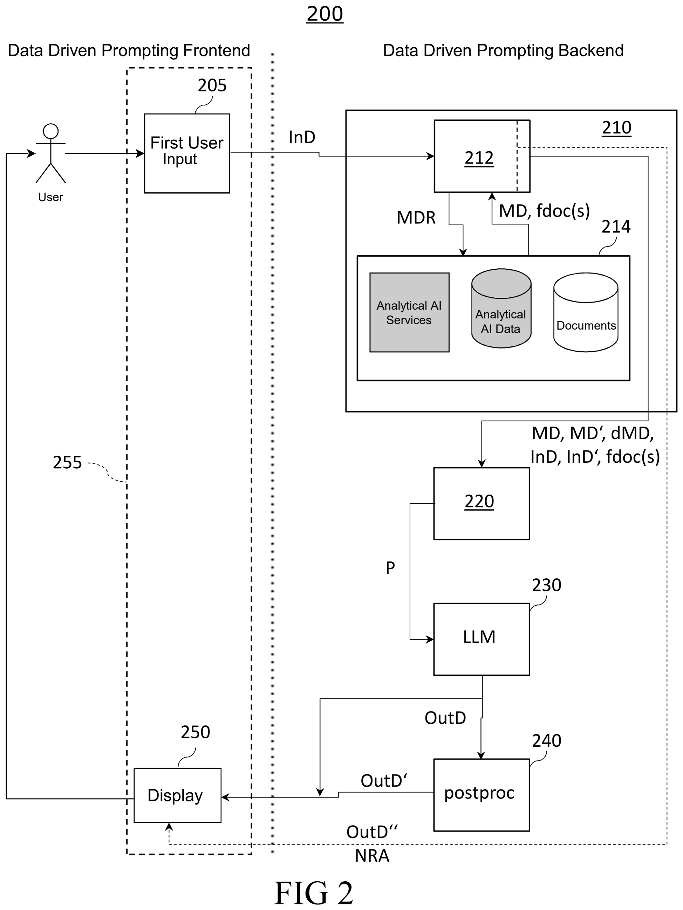

Fig. 2 shows a block diagram schematically illustrating a computing system 200 for processing input data InD from a user and processes of a corresponding method. Computing system 200 is typically similar to computing system 100 explained above with respect to Fig. 1 and also includes an AAI module 210, a prompting module 220 and a GAI module 330.

In the exemplary embodiment, system 200 has a (data driven prompting) front end for interacting with the user, in particular for receiving input data InD from the user, and a (data driven prompting) backend to determine, for the received input data InD, a prompt P and to generate, based on the prompt P, output data OutD , OutD' to be presented to the user, e.g. on the shown display 250 of the front end.

The front end can provide a communication interface 255. A touchscreen may suffice. However, other input devices such as a keyboard are typically also provided.

In the exemplary embodiment, the analytical artificial intelligence module 210 has a preprocessing module 212 and an analytical artificial intelligence metadata generating module 214.

The preprocessing module 212 can determine, for the received input data InD, a metadata request MDR and send the metadata request MDR to the AAI metadata generating module 214.

For this purpose, preprocessing module 212 is at least configured to linguistically analyse the input data.

Upon receiving the metadata request MDR, AAI metadata generating module 214 determines the metadata MD.

As shown in Fig. 2, AAI metadata generating module 214 may use analytical AI-services such as Entity or phrase extraction, classification or clustering, embeddings, time-series prediction and others as well as an AAI data base such as graph data bases, vector data bases, term stores or document indices.

In particular, AAI metadata generating module 214 may search for the metadata MD in a (remote or local) content database.

In addition, AAI metadata generating module 214 may, based on the metadata, search for further documents fdoc(s) in document-related database(s) and/or the WWW.

The determined MD and, optionally, any or a selection of found relevant document(s) fdoc(s) can be returned to preprocessing module 212.

Thereafter, preprocessing module 212 sends the metadata MD or a part MD' of the metadata MD, and optionally parts InD' of the input data InD and/or the (selection of) found relevant document(s) fdoc(s) to the prompting module 220.

Upon receiving the data from the preprocessing module 212, prompting module 220 can generate a prompt P and send the generated prompt P to a generative artificial intelligence module 230, an LLM in the shown embodiment.

Due to the injection of the metadata, various aspects of the response such as thematic context, target groups, style, emotion, level, specific concepts and entities can be controlled in accordance with the users, even for inexperienced users.

Preprocessing module 212 may in particular select and/or filter the metadata to be included into the prompt P, in particular, based on weights of the metadata that are also determined by the analytical artificial intelligence module 214 and provided via the preprocessing module to the prompting module 220.

Alternatively or preferably in addition, preprocessing module 212 may select and/or filter the received input data InD' prior to including into the prompt P based on building block templates 423 and building blocks 442.

Alternatively or preferably in addition, preprocessing module 212 may select and/or filter the (selection of) found relevant document(s) fdoc(s) prior to including into the prompt P based on building block templates 423 and building blocks 442.

Alternatively or preferably in addition, prompt building module 220, respectively 420 may insert input data InD, input data InD', metadata MD, metadata MD', documents fdoc(s) into the prompt P in a structured form using building block templates 423 in a templating engine and building blocks 422.

Alternatively or preferably in addition, prompt building module 220, respectively 420 may insert from the metadata derived metadata dMD, such as sums, average values or general aggregations into the prompt P in a structured form using building block templates 423 in a templating engine and building blocks 422.

The prompt P is generated by combination of static building blocks from 422 and dynamic template building blocks 423 that may be enriched by either input data InD, input data InD', metadata MD, metadata MD', derived metadata dMD, documents fdoc(s) or a combination thereof.

Upon receiving the prompt P, GAI module 230 may determine output data OutD that can, after optional postprocessing by a postprocessing module 240 to generate postprocessed output data OutD', be sent to and displayed on a display 250.

The postprocessing in module 240 may include quality and sanity checks on output data OutD regarding consistency in metadata (urls, language, entities, etc).

As indicated by the dashed line and the dashed arrow in Fig. 2, the preprocessing module 212 (of the Data Driven Prompting Backend, DDPB) is preferably configured to calculate (deterministically decide) whether a question forming a part or even representing the input data InD (user input) can be answered based on the found relevant document(s) fdoc(s) and/or an input document of the input data InD. Only in this event, the prompt P may be generated in module 220. Otherwise, alternative output data OutD' such as message NRA indicating that no (reasonable) answer can be obtained may be generated and, thereafter, e.g. be sent to and displayed on display 250.

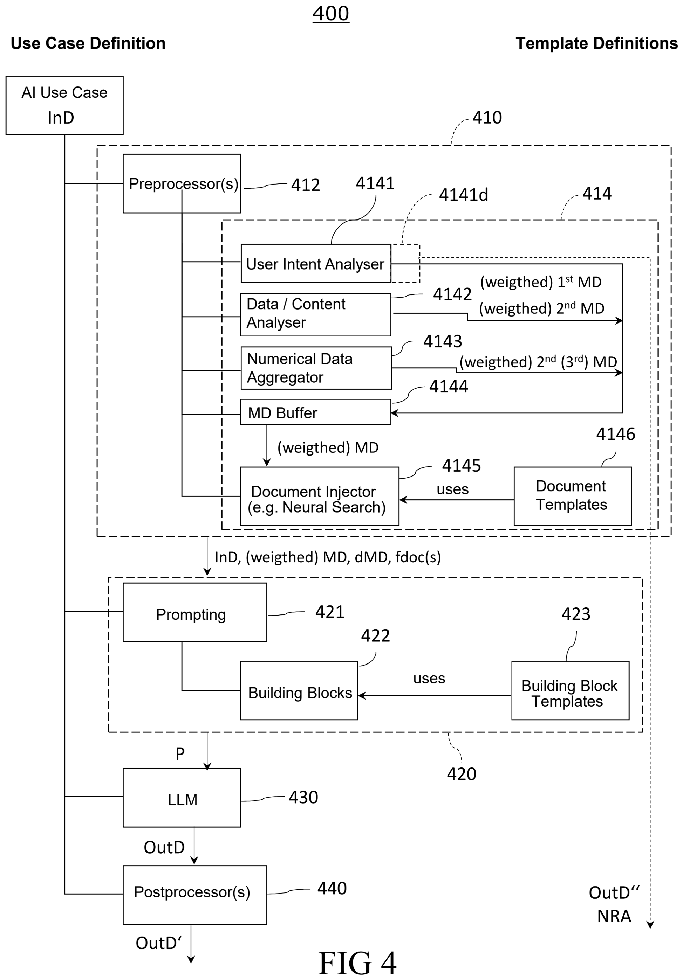

This is explained in more detail below with respect to Fig. 4 and may allow the user to redefine the user input.

Moreover, bypassing modules 220, 230 can safely avoid so-called hallucinations in the (desired) output data OutD and the postprocessed output data OutD', respectively (when answering questions).

Accordingly, the output of the (generative AI based/using) computing system 200 can be improved, particularly with regard to output quality. This also ensures that the generative AI is only used when it is appropriate, which can lead to energy savings. Moreover, the interaction between users and GAIMs can be improved.

The term hallucinations as used herein refers to the phenomenon of a generative artificial intelligence models or modules (230 in Fig. 2), in particular an LLM, generating incorrect, nonsensical, or fabricated information that is not based on factual data. This can happen because the GAI-model is not reasoning but is instead predicting the most plausible sequence of words or patterns based on its training data, which can lead to mistakes that seem factual. Hallucinations can range from minor inaccuracies to creating completely fictional sources, historical events, or images. Moreover, hallucinations are very prominent in combination with numerical data. Furthermore, hallucinations are often systematically increased by the fact that standard LLMs are optimized during evaluation cycles by means of incentivization.

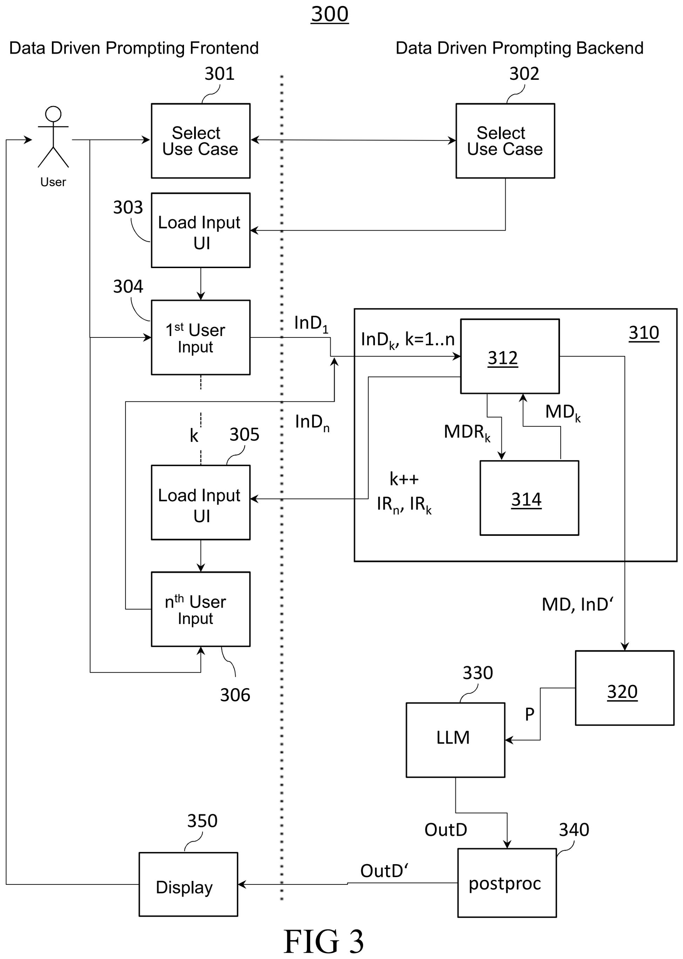

Fig. 3 shows a block diagram schematically illustrating a computing system 300 for processing input data and processes of a corresponding method.

The computing system 300 is typically similar to the computing system 200 explained above with respect to Fig. 2, and also includes an AAI module 210 having a preprocessing module 312 and an AAI metadata generating module 314, a prompting module 320, a GAI module 330 and an optional postprocessing module 340.

However, in the exemplary embodiment, the user can select between different use cases on a graphical user interface 301. Graphical user interface 301 may be generated by a use case selector module 302 and displayed on a display 350.

Typical examples of uses cases are providing a summary of one or more documents, answering questions (chatbot), providing content, as well as improving and/or optimizing the content of a document. The use cases may relate to marketing, customer service or knowledge management.

Upon receiving the selected use case, selector module 302 may cause displaying a use-case-specific graphical input user interface 303 on display 350.

On / via the graphical input user interface 303, the user can input first input data InD₁ to be processed by the backend.

Similar as explained above for system 200, the received input data InD₁ are processed by a preprocessing module 312 and an analytical artificial intelligence metadata generating module 314 of analytical artificial intelligence module 310 to generate the metadata MD for a prompting module 320 that generates a prompt P for a GAI module 330 generating output data OutD, OutD' that can, after optional postprocessing by a postprocessing module 340, be send to and displayed on display 350.

However, in the exemplary embodiment, the prompt is generated iteratively as indicated by the index / loop variable k in Fig. 3.

More particular, preprocessing module 312 may generate a (further) request IRₖ₊₊ (k++, IRₖ) for a (further) user feedback and/or further input data InDₖ₊₊, if, for an actual value of k, the metadata determined so far by metadata generating module 314 upon receiving the metadata request(s) MDRₖ are estimated, by preprocessing module 312, to be not good enough for a reasonable prompt generation. This estimation may e.g. be based on the weights of the metadata.

These processes may be iterated until at least one, typically enough, sufficiently specific and/or promising metadata MD are collected, a predefined maximum number of loop iterations (k=n) is reached and/or the user provides the feedback that the output data are to be provided for the collected/selected metadata (and/or found documents).

This allows for improved continued and/or guided interaction of users with the AI-system to yield a desired result in accordance with the user's intend.

In addition, preprocessing module 312 is typically also configured to select and/or filter and send relevant document(s) to prompting module 320.

Fig. 4 is a block diagram schematically illustrating a computing system 400 for processing input data InD and a corresponding method.

The computing system 400 is typically similar to the computing systems 200, 300 explained above with respect to Figs. 2, 3, and also includes an AAI module 410 having a preprocessing module 412 and an AAI metadata generating module 414, a prompting module 420, a GAI module 430 and an optional postprocessing module 440.

However, AAI metadata generating module 414 is presented in more detail.

In the exemplary embodiment, for a selected use case and provided input data InD, preprocessing module 412 controls a user intent analyzing sub-module 4141, a first data analyzing sub-module 4142, and a second data analyzing sub-module 4142 of AAI metadata generating module 414 which are all configured to provide respective metadata for the provided input data InD (and the selected use case), typically as respective weighted metadata.

In particular, while user intent analyzing sub-module 4141 determines (weighted) first metadata 1^{st} MD for the input data InD, data analyzing sub-modules 4142, 4143 determine respective (weighted) second metadata 2^{nd} MD for the input data InD.

Accordingly, AAI metadata generating module 414 generates the metadata using two qualitative analytical artificial intelligence sub-modules 4141 (for determining user-related first metadata 1^{st} MD), 4142 (for determining content-related second metadata 2^{nd} MD) and one quantitative analytical artificial intelligence sub-module 4142 (for determining content-related quantitative second metadata 2^{nd} MD). The content-related quantitative second metadata 2^{nd} MD may also be denoted as third metadata 3^{rd} MD.

The first metadata 1^{st} MD may be or refer at least refer to a user intent, a user sentiment, and wherein the second metadata refer to a content of the input data, in particular an entity, a category of the content, a topic of the content. In addition, the second metadata can refer to numerical aggregations of numbers and quantities in the content in order to provide reliable information about sums, averages or anomalies of quantities in the content.

More particular, module 4141 detects the intention and reasons behind user input to generate metadata that can be used e.g. to improve and/or personalize the output data. In particular, module 4141 typically include services for sentiment and emotion analysis, Module 4142 may include services for topic and risk classification, named-entity recognition, persona classification, document type analysis, topic detection, extraction of relevant phrases to generate (qualitative) metadata. Module 4143 may include services to determine (quantitative) metadata, in particular to determine numerical data or numerical values of (measurable objects of) the input data as well as calculate the sum, average, variation or any other mathematical-statistical function on the determine numerical data or numerical values and the measurable objects (financial figures, dimensions, physical values such as temperatures, ...), respectively. As shown in Fig. 4, the typically weighted first and second metadata 1^{st} MD, 2^{nd} MD are typically collected in a metadata buffer module 4144 of AAI module 410.

Based on the typically weighted first and second metadata 1^{st} MD, 2^{nd} MD, preferably based on the higher or highest ranked first and second metadata 1^{st} MD, 2^{nd} MD (metadata with highest weights), a search sub-module 4145 of AAI module 410 can search for related documents fdoc(s) using a use case specific template 4146.

Similar as explained above for AAI module 310, AAI module 410 may determine the weighted first and second metadata 1^{st} MD, 2^{nd} MD and/or the documents fdoc(s) iteratively.

Based on the typically weighted first and second metadata 1^{st} MD, 2^{nd} MD, in particular a selection of high ranked first and second metadata 1^{st} MD, 2^{nd} MD, and found related documents fdoc(s), prompting module 420 generates the prompt P for GAI module 430 to generate output data OutD. The generate output data OutD may be received by postprocessing module 440 to generate postprocessed output data OutD'.

In particular, depending on the selected use case, building blocks 422 may be selected from pre-defined building prompt templates 423 and filled with and/or enriched based on the received metadata and found documents fdoc(s) or respective parts thereof.

According to an embodiment, preprocessing module 412 includes a decision sub-module 4141d that may be part of user intent analyzing sub-module 4141 or be a separate sub-module.

Decision sub-module 4141d is configured to (dterministically) determine whether, for the (selected) uses case, a question forming a part or even representing the input data InD (user input) can be answered based on the provided input data InD, in particular parts InD' of the input data InD such as documents, and metadata MD or parts MD' of the metadata MD, derived metadata dMD, or documents fdoc(s) determined in preprocessing module 412 or any combination thereof.

If so, the prompt P may be generated in (data-driven) prompting module 420. Otherwise, alternative output data OutD' such as message NRA indicating that no (reasonable) answer can be provided may be generated and, thereafter output.

Accordingly, hallucinations can be avoided, in particular for questions that by design require to generate answers from a totality of data, rather than from a couple of documents injected by (neural) search sub-module module 4145.

For example, the preprocessing module 412 can forward the user input InD to user intent analyzing sub-module 4141, which checks whether the question of the user matches the context of the selected use case, typically based on the (weighted) metadata MD (of a content database) or a part thereof. In particular, user intent analyzing sub-module 4141 may checks whether the question of the user matches the context of the use case and the meta data MD of the content base. Questions that do not match (are out of scope) can immediately be answered with "Based on the given data I cannot give a reliable answer for your question. Please refine your question and/or provide more input data", as message NRA.

For example, the computing system 400 is able to precisely answer a question like "What person has most often been cited in a negative sense with respect to the Ukraine war in Western European media?"

For this purpose a combination of the weighted semantic metadata and weighted numerical data may be used to give a precise, measurable and provable result based on the full set of data in the own and external content databases.

In contrast, a standard LLM would answer the questions based on an excerpt of a couple of documents in combination with its own knowledge trained on world data, that may be connotated with a negative sentiment in a certain region or culture.

Furthermore, computing system 400 is able to reliably answer questions requiring numerical calculations and/or referring to numerical values, such as "In which city within Europe do we have the highest change in net migration in the last 3 months?".

To answer this question, the data analyzing sub-module 4143 may be used to calculate the net migration rate on data filtered by time, sorts the results by decreasing value and delivers a table with columns City and Net Migration Rate.

Using data analyzing sub-module 4143, the computing system 400 can also aggregate numerical data (values) which refer to geometrical, physical and/or chemical data (values) and/or sensor data referring to geometrical, chemical or physical properties such extensions, composition, concentrations, pressure, temperature and the like.

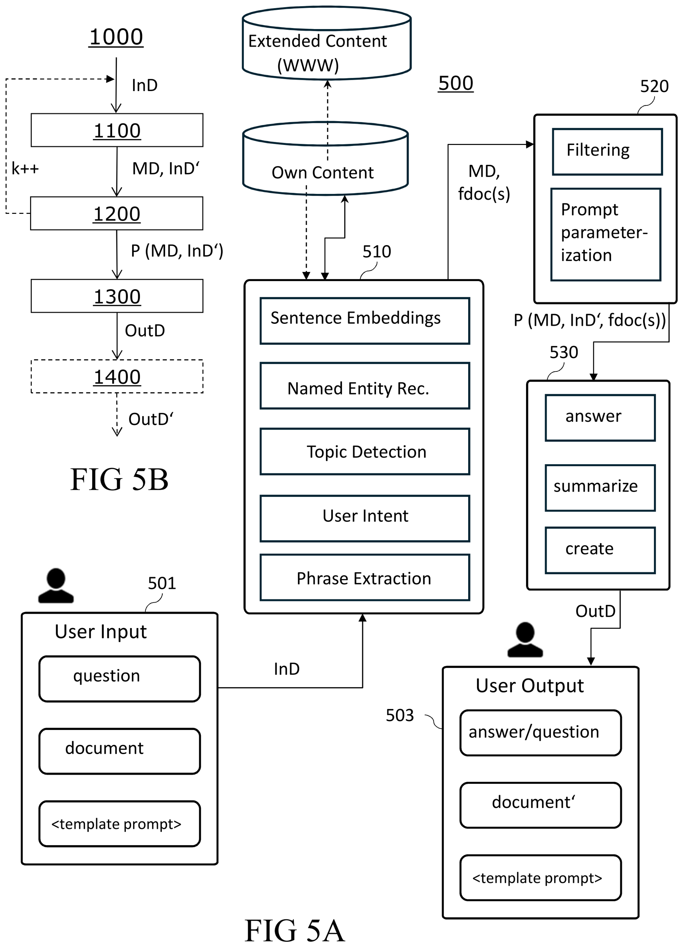

Fig. 5A is a block diagram schematically illustrating a computing system 500 for processing input data and processes of a corresponding method.

The computing system 500 is typically similar to the computing systems 200, 300, 400 explained above with respect to Figs. 2 to 4, and also includes an AAI module 510, a prompting module 520, and a GAI module 530.

Using a graphical user interface 501, a user can provide input data InD such as a question and/or an input document such as a product related document.

Upon receiving the input data InD, AAI module 510 generates corresponding metadata MD and performs a search for related documents fdoc(s) for the prompting module 520.

As shown in Fig. 5A, AAI module 510 typically performs a relevant phrase extraction, a topic detection, a user intent detection, a sentiment or emotion detection, an entity recognition (detection) and a determination of a sentence embedding for the the input data InD.

Moreover, based on the results of these processes, the metadata MD can be determined and a documents search in own content (e.g. database(s)) and extended content (other/remote database(s) and/or the WWW) can be performed.

Depending on the use case, the typically use case dependent GAI module 530 produces the requested output data InD such as an answer to the question, and an enriched/optimized document *"document‴.*

Thereafter, the output data InD may be displayed in a graphical user interface 503.

Fig. 5B is a flow chart of a method 1000 for improving the user-interaction with GAIs. Method 1000 may in particular be performed by any of the systems 100-500 explained above.

In a first block 1100 of method 1000, input data InD are received at (fed to) an analytical artificial intelligence module and used to determine metadata MD for the input data InD.

As indicated by the dashes arrow and loop variable k in Fig. 5B, the metadata MD may be determined iteratively, in particular interactively with the user.

In a subsequent block 1200 of method 1000, a prompting module determines a prompt P based on the received metadata MD.

In a subsequent block 1300 of method 1000, output data OutD are generated by a generative artificial intelligence module in accordance with the prompt P as received from the prompting module.

Thereafter, the output data OutD may be postprocessed, in a subsequent block 1400 of method 1000.

Thereafter, the output data OutD or the postprocessed output data OutD' may be stored and/or presented to the user.

Optionally, method 1000 may continue with another cycle, in which the output data OutD or the postprocessed output data OutD' are used as new input data.

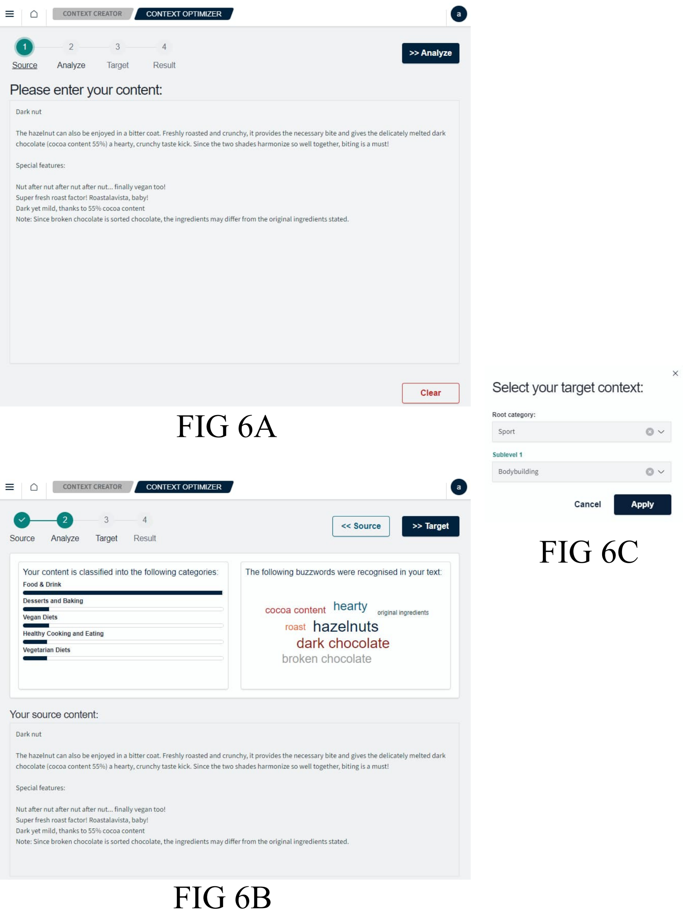

Figs. 6A - 8B are screen shots of graphical user interfaces which were generated during the interaction of a user with a computing system as described herein.

Fig. 6A shows a source tab (graphical user interface object allowing several documents and/or panels within a window) of the graphical user interface with a text provided by the user using a context creator tab of the graphical user interface and after selecting the use case of optimizing the content, either as a text document, by copy and paste or by typing.

In the illustrative example, the input data refer to a hazelnut chocolate product.

After pressing the "Analyze" button, the analytical artificial intelligence module of the computing system analyzes the input data. The results are presented in the graphical user interface of Fig. 6B. As shown, found metadata (keyword or buzzwords in the exemplary embodiment) may be displayed together with their weights (encoded by the size in the exemplary embodiment).

Further, the computing system has decided that further feedback of the user is required, in form of a target selection in the exemplary embodiment.

After pressing the "Target" button, in a popup window shown in Fig. 6C, the desired target context can be selected by the user from further metadata that may be suitable targets, as determined by the computing system.

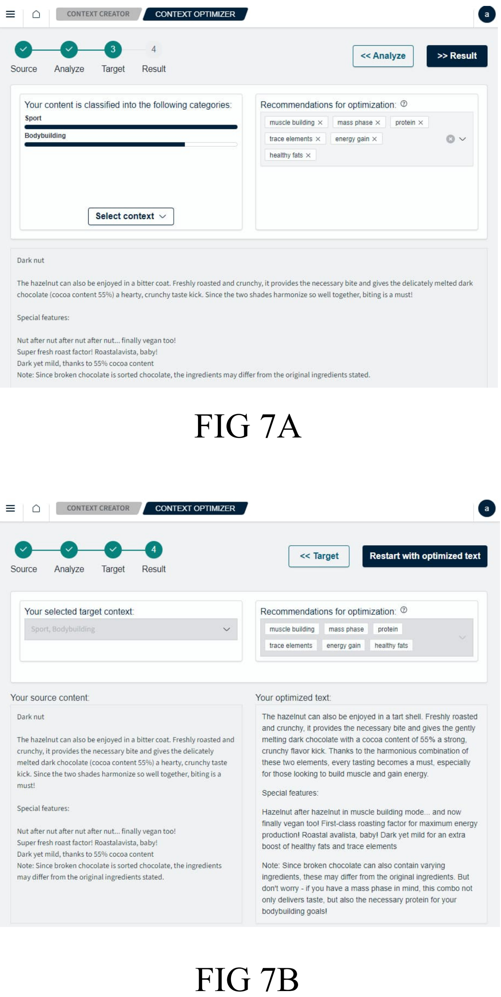

After selecting the target (root category "Sport" and sublevel "Bodybuilding" in the exemplary embodiment), the analytical artificial intelligence module decides that further refinement may improve the result and recommends further determined metadata for this purpose, as shown in Fig. 7A. The user may further select or deselect recommendations given by the analytical artificial intelligence module to direct the optimization based on second metadata (relevant phrase, audience personas, etc.).

After pressing the "Result" button, the prompt is generated by the prompt module and fed to a generative artificial intelligence module (an LLM) of the computing system which generates corresponding output data.

The generated output data are shown as optimized text right of the source content in Fig. 7B.

The output data / optimized text may be used by the user, e.g. as improved product description for advertising in the bodybuilder scene, or as a basis therefor.

Alternatively, the output data / optimized text may be used as input data for a next optimizing cycle using the improved AI computing system.

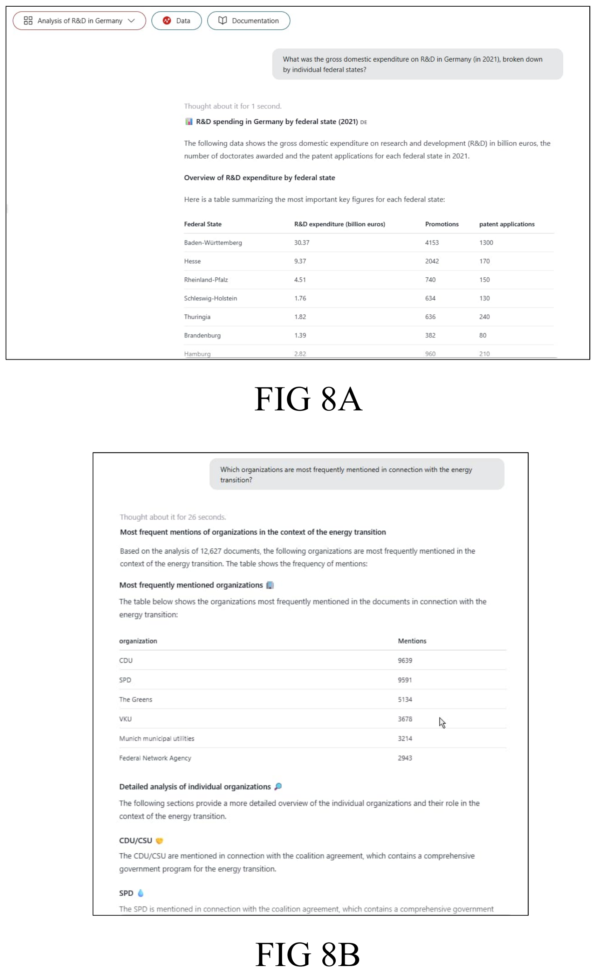

Fig. 8A shows the user interface of a chat application with a question provided by the user and an answer produced by a computing system as explained above with respect to Figs. 1 to 5A, in particular the computing system 400 or 500, based on a (at least one) content database.

In the illustrative example, the question refers to quantitative data about research activities of various organizations. This is however only an easy to understand example use case which still illustrates the capabilities of the system for processing input data as explained herein. In other embodiments, numerical data or values referring to physical, chemical and/or geometric quantities (values/variables) such as a distance, a temperature, a pressure, a melting point or a concentration, and/or an aggregation of the numerical data or numerical values are processed similarly.

After receiving the user question, the artificial intelligence module of the computing system analyzes the user intent in an AAI sub-module such the AAI sub-module 4141 shown in Fig, 4 and extracts relevant context information from the user input as first metadata.

Furthermore, the computing system generates second (2^{nd}) metadata for filtering content with search sub-module such as the module 4145 shown in Fig. 4, which may also be referred to as a document injector sub-module.

Thereafter, the computing system can aggregate the numerical data using a data analyzing sub-module in relation to data assigned with the 2^{nd} metadata, such as the data analyzing sub-module 4143 shown in Fig. 4.

Thereafter, the computing system can send a set of weighted metadata including the aggregated numerical metadata to a prompting module, in particular prompting module 420, 520 as shown in Figs. 4, 5A.

Thereafter, the prompting module can inject the input data into building block prompt templates, such as the building block templates 423 shown in Fig. 4, automatically selected for the identified use-case and user-intent and generates an enriched prompt.

Thereafter, an LLM (e.g. LLM 430 shown in Fig. 4) can generate an output that includes the aggregated sum of numerical data derived from the full set of documents.

Fig. 8B shows a variation of the same use case, where the user question includes the intent of knowing a concrete size or quantity in combination with a qualitative aspect.

To answer the question the computing system can use the content-related metadata (Topic Detection from the analytical artificial intelligence module 510) in combination with the result of an aggregation and ranking of numerical metadata as input to the prompting module.

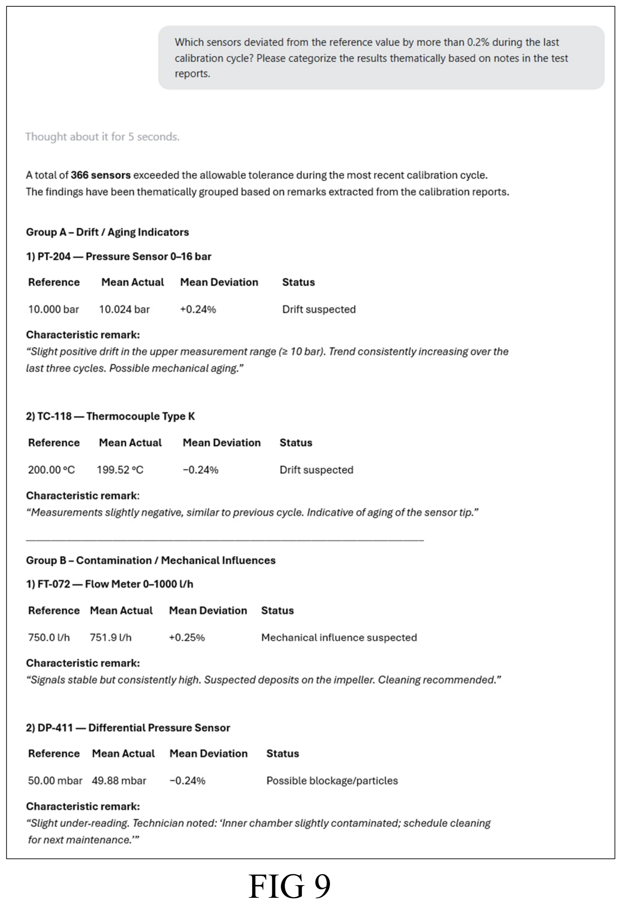

Fig. 9 shows the user interface of a chat application with a question provided by the user and an answer produced by a computing system as explained above with respect to Figs. 1 to 5A, in particular the computing system 400 or 500, based on a (at least one) content database. The shown user interface and the data processing are similar to those explained with respect to Figs. 8A and 8B.

However, the question of the user in Fig. 9 refers to the accuracy of different sensors stored in previously determined (measurement based) test reports (calibration reports), typically in an own content database.

Using a data analyzing sub-module such as the data analyzing sub-module 4143 shown in Fig. 4, the computing system can aggregate numerical data (values) which refer to physical data (values) of physical sensors, measured tolerances with respect to pressure, temperature and flow rate, respectively, in the exemplary embodiment.

As a result, this also enables reliable automatic processing of a large amount of measured data, which the user does not have to take care of in detail. Instead, the users receive clear and concise answers, which can be used for further queries to the system or as a basis for a decision, e.g. which sensors are to be used for which purpose/application.

Accordingly, the output of generative AI systems can be improved, particularly with regard to quality. Moreover, the interaction between users and GAIMs can be improved, in particular simplified.

According to an embodiment, which can be combined with other embodiments described herein, a non-volatile computer-readable medium comprising instructions which, when executed by one or more processors of a computing system preferably being container, the computing system typically being a hybrid artificial intelligence system, a heterogeneous and/or distributed computing system, cause the computing system to carry out: feeding input data to a first artificial intelligence module, in particular an analytical artificial intelligence module, which is provided by the computing system such as an analytical artificial intelligence system of the computing system and/or is implemented as a container by the computing system, to determine metadata for the input data, in particular weighted metadata, feeding at least a part of the metadata to a prompting module to determine a prompt, and feeding the prompt to a second artificial intelligence module, in particular a generative artificial intelligence module or system, which is provided by the computing system, preferably implements a LLM, and/or is implemented as a further container by the computing system, to determine output data for the input data.

According to an embodiment, which can be combined with other embodiments described herein, a computing system includes at least one processor, and at least one non-transitory computer readable storage medium storing instructions that, when executed by the at least one processor, cause the computing system to: execute a first artificial intelligence module, in particular an analytical artificial intelligence module, determine, using the first artificial intelligence module, metadata for the received input data, in particular weighted metadata, determine, based at least on a part of the metadata, a prompt, and feeding the prompt to a second artificial intelligence module, in particular a generative artificial intelligence module or to a generative artificial intelligence system (functionally) connected with the computing system to generate output data for the received input data.

According to an embodiment, which can be combined with other embodiments described herein, a computer-implemented method for improving human-machine interaction includes determining metadata for input data received via or from an interface, in particular a graphical interface, determine, based on the determined metadata, in particular on weights of the metadata, if further input data are required, and, if so, sending a further input data request to the interface, receiving the further input data via or from the interface, and determining, based on the metadata, the received input data, the received further input data and further metadata determined for the received further input data, a prompt for a generative artificial intelligence module or a generative artificial intelligence system configured to generate output data upon receiving the prompt.

According to embodiments, which can be combined with other embodiments described herein, the metadata are weighted metadata, include first metadata typically referring refer to at least one of: a user intent, a user sentiment, , and second metadata different to the first metadata and typically referring to at least one of: a content of the input data, in particular a category of the content or a topic of the content and an entity.

According to an embodiment, which can be combined with other embodiments described herein, a method includes feeding input data to a first ML-based module, which is typically implemented as an analytical artificial intelligence module, to determine metadata for the input data, and determining, based on the metadata a prompt for a second ML-based module, which is typically implemented as a generative artificial intelligence module and/or based on an LLM, and configured to generate output data for received prompts.

According to embodiments, which can be combined with other embodiments described herein, determining the prompt includes selecting metadata to be included into the prompt based on weights of the metadata, filter the metadata, filter the input data, including the filtered metadata into the prompt, including the filtered input data into the prompt, and/or generating the prompt based on a selected use case, in particular a use case selected by the user.

According to embodiments, which can be combined with other embodiments described herein, the second artificial intelligence module/second ML-based module is, compared to the first artificial intelligence module/ first ML-based module, smaller (has less AI parameters / variables that the model learns during training), typically smaller by a factor of at least 5, 10 or even 100, less generic and/or at least expected to have a lower energy consumption during the training and/or when performing the respective desired process(es)/task(s).

According to embodiments, which can be combined with other embodiments described herein, determining the metadata for received input data includes at least one of, preferably several of: linguistic processing the input data, determining, for the input data, a metadata request, determine, for the received input data and the determined metadata, if further metadata and/or further input data are required, and, if so, determining a corresponding further metadata request and/or a corresponding further input data request, receiving at least one of the input data and the further input data, in particular respective user input data, determining weights for the metadata, determining sets of metadata, each set comprising at least two metadata entries and a weight for each of the least two metadata entries, determining the respective metadata in accordance with the respective metadata request, searching for the respective metadata in a content database typically comprising weighted metadata, searching for the respective metadata in a metadata database comprising previously determined metadata, and determining the respective metadata based on a local or remote (target) content, in particular based on webpages provided in a network such as the WWW.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned. Such modifications to the inventive concept are intended to be covered by the appended claims.

The present disclosure provides a plurality of embodiments, some of which are listed below.

Embodiment 1. A system for processing input data, the system comprising:
- one or more processors;
- an analytical artificial intelligence module that is, when executed by at least one of the one or more processors, configured to determine, metadata for the input data;
- a prompting module that is, when executed by at least one of the one or more processors, configured to determine, based at least on a part of the metadata, a prompt; and
- a generative artificial intelligence module that is, when executed by at least one of the one or more processors, configured to determine, based on the prompt, output data.

Embodiment 2. The system of Embodiment 1, wherein the analytical artificial intelligence module comprises:
- at least one preprocessing module that is, when executed by at least one of the one or more processors, configured to at least one of:
   o calculate, for the input data and preferably based at least on a part of the metadata, whether a question forming a part or representing the input data can (reliably) be answered by the system;
   o linguistically process the input data;
   o determine, for the input data, a metadata request;
   o determine, for the input data and the determined metadata, if further metadata and/or further input data are required, and, if so, determine a corresponding further metadata request and/or a corresponding further input data request;
   o send at least a part of the metadata and/or the further metadata to the prompting module; and
   o receiving at least one of the input data and the further input data, in particular respective user input data; and
- an analytical artificial intelligence metadata generating module that is, when executed by at least one of the one or more processors, configured to at least one of:
   o determining weights for the metadata;
   o determining respective sets of metadata, each set comprising at least two metadata entries and a weight for each of the least two metadata entries;
   o determining the respective metadata in accordance with the respective metadata request;
   o searching for the respective metadata in a content database typically comprising weighted metadata;
   o searching for the respective metadata in a metadata database comprising previously determined metadata; and
   o determining the respective metadata based on a local or remote content, in particular based on webpages provided in a network such as the WWW.

Embodiment 3. The system of any of the preceding Embodiments, wherein the metadata comprise at least one of: a user intent, a user sentiment, semantic metadata related with the input data, numerical metadata, quantitative metadata, qualitative metadata, and content metadata for a content of the input data, in particular numerical data or numerical values of the input data, e.g. numerical data or numerical values of physical, chemical and/or geometric quantities of the input data, and/or an aggregation of the numerical data or numerical values, a category of the content or a topic of the content, a concept related with the content and/or the category, at least one keyword such as an entity related with the content, the concept and/or the category, and/or at least one relevant phrase related with the content, the concept and/or the category.

Embodiment 4. The system of any of the preceding Embodiments, wherein the system is a hybrid artificial intelligence system, wherein the system is a heterogeneous artificial intelligence system, wherein the input data comprise input textual data and the output data comprise output textual data, wherein the generative artificial intelligence module is based on machine learning, implemented in a container, configured to generate the output text data, and/or comprises a Large Language Model, and wherein the analytical artificial intelligence module is based on machine learning, implemented in a container, and/or comprises at least one of: an intent analysis capability, a sentiment analysis capability, an emotion analysis capability, a semantic knowledge graph, a semantic analysis capability and a natural language processing capability, in particular as a respective module or sub-module.

Embodiment 5. The system of any of the preceding Embodiments, wherein the analytical artificial intelligence module is, when executed by at least one of the one or more processors, configured to determine, based on the metadata for the input data, a request for at least one of: a user feedback and further input data.

Embodiment 6. The system of Embodiment 5, wherein the analytical artificial intelligence module is, when executed by at least one of the one or more processors, configured to update the metadata in accordance with a received user feedback and/or based on received further input data.

Embodiment 7. The system of Embodiment 5 or 6, wherein the system is configured to at least one of:
o generate, based on the request, a user input interface; and
o display the user input interface, in particular on a display of the system.

Embodiment 8. The system of any of the preceding Embodiments, wherein the prompting module is, when executed by at least one of the one or more processors, configured to at least one of:
- selecting metadata to be included into the prompt;
- including, based on weights of the metadata, the weights being determined by the analytical artificial intelligence module, metadata into the prompt;
- including at least a part of the metadata into the prompt;
- including at least a part of the input data into the prompt;
- filter the metadata;
- filter the input data;
- including the filtered metadata into the prompt;
- including the filtered input data into the prompt; and
- generating the prompt based on a selected uses case, and/or
wherein the prompt comprises at least a part of the metadata and at least a part of the input data.

Embodiment 9. The system of any of the preceding Embodiments, wherein the input data are received via an interface from a user, and/or wherein the input data comprise at least one of: a user request, a document and product-related data.

Embodiment 10. The system of any of the preceding Embodiments, wherein the analytical artificial intelligence module, in particular the analytical artificial intelligence metadata generating module comprises:
- a user intent analyzing sub-module configured, when executed by at least one of the one or more processors, to determine first metadata for the input data; and
- at least one data analyzing sub-module configured, when executed by at least one of the one or more processors, to determine second metadata for the input data different to the first metadata.

Embodiment 11. The system of Embodiment 10, wherein the first metadata refer to at least one of: a user intent, a user sentiment, , and wherein the second metadata refer to a content of the input data, in particular numerical data or numerical values of the input data, e.g. numerical data or numerical values of physical, chemical and/or geometric quantities of the input data, and/or an aggregation of the numerical data or numerical values, a category of the content, a topic of the content, and an entity of the content.

Embodiment 12. The system of any of the preceding Embodiments, further comprising:
- a search sub-module configured, when executed by at least one of the one or more processors, to search for documents based on the metadata,
- wherein the prompting module is, when executed by at least one of the one or more processors, configured to determine the prompt, based on at least one document found by the search sub-module or a part of the at least one document.

Embodiment 13. The system of Embodiment 10 and Embodiment 12, wherein the search sub-module is, when executed by at least one of the one or more processors, configured to at least one of:
- searching for the documents based on the first metadata and the second metadata;
- performing a neural search for documents based on the input data, in particular a question extracted from the input data; and
- determining, based on the metadata, a weight for any document found by the search sub-module.

Embodiment 14. The system of any of the Embodiments 10 to 13, wherein the prompting module is, when executed by at least one of the one or more processors, configured to:
- determining the prompt based on the first metadata, the second metadata, at least a part of the input data, and at least one document found by the search sub-module or a part thereof.

Embodiment 15. The system of any of the Embodiments 10 to 14, wherein the prompting module is, when executed by at least one of the one or more processors, configured to:
- include at least a part of the first metadata, at least a part of the second metadata, at least a part of the input data, and at least a part of at least one document found by the search sub-module into the prompt.

Embodiment 16. The system of any of the Embodiments 12 to 15, wherein the system is configured to at least one of:
- delimit, typically depending on the generative artificial intelligence module, a number of documents found by the search sub-module to be further used to determine at least one of: the prompt and the output data; and
- select a subset of the documents based on the weights;
- wherein at least one of: the prompt and the output data is determined based on the subset of the found documents.

Embodiment 17. The system of any of the Embodiments 12 to 16, wherein the system is configured to:
- feed the first metadata, the second metadata and at least one document found by the search sub-module, typically a subset of documents found by the search sub-module and selected in accordance with corresponding weights to the prompting module.

Embodiment 18. The system of any of the Embodiments 12 to 17, wherein the system is configured to at least one of:
- output the output data; and
- display at least a part of the output data, in particular on a display of the system.

Embodiment 19. A computer-implemented method, in particular a computer-implemented method for processing data and/or improving human-machine interaction, the method comprising:
- feeding input data to an analytical artificial intelligence module for determining metadata for the input data;
- feeding at least a part of the metadata to a prompting module for determining a prompt for the input data; and
- feeding the prompt to a generative artificial intelligence module for determining output data for the input data.

Embodiment 20. A computer program product or a typically non-volatile computer-readable medium comprising instructions which, when executed by one or more processors of a system, cause the system to carry out the following processes:
- feeding input data to an analytical artificial intelligence module for determining metadata for the input data;
- feeding at least a part of the metadata to a prompting module for determining a prompt for the input data; and
- feeding the prompt to a generative artificial intelligence module for determining output data for the input data.

While processes may be depicted in the figures in a particular order, this should not be understood as requiring, if not stated otherwise, that such operations have to be performed in the particular order shown or in sequential order to achieve the desirable results. In certain circumstances, multitasking and/or parallel processing may be advantageous.

Spatially relative terms such as "under", "below", "lower", "over", "upper" and the like are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present invention is not limited by the foregoing description, nor is it limited by the accompanying drawings. Instead, the present invention is limited only by the following claims and their legal equivalents.

## Claims

1. A system for processing input data, the system comprising:
one or more processors;
an analytical artificial intelligence module that is, when executed by at least one of the one or more processors, configured to determine, metadata for the input data;
a prompting module that is, when executed by at least one of the one or more processors, configured to determine, based at least on a part of the metadata, a prompt; and
a generative artificial intelligence module that is, when executed by at least one of the one or more processors, configured to determine, based on the prompt, output data.

2. The system of claim 1, wherein the analytical artificial intelligence module comprises:
at least one preprocessing module that is, when executed by at least one of the one or more processors, configured to at least one of:
calculate, for the input data and based at least on a part of the metadata, whether a question forming a part or representing the input data can be answered by the system;
linguistically process the input data;
determine, for the input data, a metadata request;
determine, for the input data and the determined metadata, if further metadata and/or further input data are required, and, if so, determine a corresponding further metadata request and/or a corresponding further input data request;
send at least a part of the metadata and/or the further metadata to the prompting module; and
receiving at least one of the input data and the further input data, in particular respective user input data; and
an analytical artificial intelligence metadata generating module that is, when executed by at least one of the one or more processors, configured to at least one of:
determining weights for the metadata;
determining respective sets of metadata, each set comprising at least two metadata entries and a weight for each of the least two metadata entries;
determining the respective metadata in accordance with the respective metadata request;
searching for the respective metadata in a content database typically comprising weighted metadata;
searching for the respective metadata in a metadata database comprising previously determined metadata; and
determining the respective metadata based on a local or remote content, in particular based on webpages provided in a network such as the WWW.

3. The system of any of the preceding claims, wherein the metadata comprise at least one of: a user intent, a user sentiment, semantic metadata related with the input data, numerical metadata, quantitative metadata, qualitative metadata, and content metadata for a content of the input data, in particular numerical data or numerical values of the input data, e.g. numerical data or numerical values of physical, chemical and/or geometric quantities of the input data, and/or an aggregation of the numerical data or numerical values, a category of the content or a topic of the content, a concept related with the content and/or the category, at least one keyword such as an entity related with the content, the concept and/or the category, and/or at least one relevant phrase related with the content, the concept and/or the category.

4. The system of any of the preceding claims, wherein the system is a hybrid artificial intelligence system, and/or wherein the system is a heterogeneous artificial intelligence system, and/or wherein the input data comprise input textual data, and/or wherein the input data are received via an interface from a user, and/or wherein the input data comprise at least one of: a user request, a document and product-related data, and/or wherein the output data comprise output textual data, and/or wherein the generative artificial intelligence module is based on machine learning, implemented in a container, configured to generate the output text data, and/or comprises a Large Language Model, and/or wherein the analytical artificial intelligence module is based on machine learning, implemented in a container, and/or comprises at least one of: an intent analysis capability, a sentiment analysis capability, an emotion analysis capability, a semantic knowledge graph, a semantic analysis capability and a natural language processing capability, in particular as a respective module or sub-module, preferably the analytical artificial intelligence module being, when executed by at least one of the one or more processors, configured to determine, based on the metadata for the input data, a request for at least one of: a user feedback and further input data.

5. The system of claim 4, wherein the analytical artificial intelligence module is, when executed by at least one of the one or more processors, configured to update the metadata in accordance with a received user feedback and/or based on received further input data.

6. The system of any of the preceding claims, wherein the system is configured to at least one of:
generate, based on the request, a user input interface;
display the user input interface, in particular on a display of the system,
output the output data; and
display at least a part of the output data, in particular on the display of the system.

7. The system of any of the preceding claims, wherein the prompting module is, when executed by at least one of the one or more processors, configured to at least one of:
selecting metadata to be included into the prompt;
including, based on weights of the metadata, the weights being determined by the analytical artificial intelligence module, metadata into the prompt;
including at least a part of the metadata into the prompt;
including at least a part of the input data into the prompt;
filter the metadata;
filter the input data;
including the filtered metadata into the prompt;
including the filtered input data into the prompt; and
generating the prompt based on a selected uses case, and/or
wherein the prompt comprises at least a part of the metadata and at least a part of the input data.

8. The system of any of the preceding claims, wherein the analytical artificial intelligence module, in particular the analytical artificial intelligence metadata generating module comprises:
a user intent analyzing sub-module configured, when executed by at least one of the one or more processors, to determine first metadata for the input data; and
at least one data analyzing sub-module configured, when executed by at least one of the one or more processors, to determine second metadata for the input data different to the first metadata,
preferably the first metadata referring to at least one of: a user intent, a user sentiment, preferably the second metadata referring to a content of the input data, in particular numerical data or numerical values of the input data, e.g. numerical data or numerical values of physical, chemical and/or geometric quantities of the input data, and/or an aggregation of the numerical data or numerical values, a category of the content, a topic of the content, and an entity of the content.

9. The system of any of the preceding claims, further comprising:
a search sub-module configured, when executed by at least one of the one or more processors, to search for documents based on the metadata,
preferably the prompting module being, when executed by at least one of the one or more processors, configured to determine the prompt, based on at least one document found by the search sub-module or a part of the at least one document,
preferably the search sub-module being, when executed by at least one of the one or more processors, configured to at least one of:
searching for the documents based on the first metadata and the second metadata;
performing a neural search for documents based on the input data, in particular a question extracted from the input data; and
determining, based on the metadata, a weight for any document found by the search sub-module.

10. The system of claim 9, wherein the prompting module is, when executed by at least one of the one or more processors, configured to:
determining the prompt based on the first metadata, the second metadata, at least a part of the input data, and at least one document found by the search sub-module or a part thereof; and
the system further comprising:
searching for the documents based on the first metadata and the second metadata;
performing a neural search for documents based on the input data, in particular a question extracted from the input data; and
determining, based on the metadata, a weight for any document found by the search sub-module.

11. The system of claim 9 or 10, wherein the prompting module is, when executed by at least one of the one or more processors, configured to:
include at least a part of the first metadata, at least a part of the second metadata, at least a part of the input data, and at least a part of at least one document found by the search sub-module into the prompt; and
the system further comprising:
searching for the documents based on the first metadata and the second metadata;
performing a neural search for documents based on the input data, in particular a question extracted from the input data; and
determining, based on the metadata, a weight for any document found by the search sub-module.

12. The system of any of claims 9 -11, wherein the system is configured to at least one of:
delimit, typically depending on the generative artificial intelligence module, a number of documents found by the search sub-module to be further used to determine at least one of: the prompt and the output data; and
select a subset of the documents based on the weights;
and/or wherein at least one of: the prompt and the output data is determined based on the subset of the found documents.

13. The system of any of claims 7 - 12, wherein the system is configured to:
feed the first metadata, the second metadata and at least one document found by the search sub-module, typically a subset of documents found by the search sub-module and selected in accordance with corresponding weights to the prompting module; and
the system further comprising:
searching for the documents based on the first metadata and the second metadata;
performing a neural search for documents based on the input data, in particular a question extracted from the input data; and
determining, based on the metadata, a weight for any document found by the search sub-module.

14. A computer-implemented method for improving human-machine interaction, the method comprising:
feeding input data to an analytical artificial intelligence module for determining metadata for the input data, in particular an analytical artificial intelligence module as claimed in any of claims 2, 4, 5, 8;
feeding at least a part of the metadata to a prompting module for determining a prompt for the input data, in particular a prompting module as claimed in any of claims 7, 9, 10, 11; and
feeding the prompt to a generative artificial intelligence module for determining output data for the input data, in particular a generative artificial intelligence module as claimed in claim 4.

15. A computer program product or a computer-readable medium comprising instructions which, when executed by one or more processors of a system, cause the system to carry out the following processes:
feeding input data to an analytical artificial intelligence module for determining metadata for the input data, in particular an analytical artificial intelligence module as claimed in any of claims 2, 4, 5, 8;
feeding at least a part of the metadata to a prompting module for determining a prompt for the input data, in particular a prompting module as claimed in any of claims 7, 9, 10, 11; and
feeding the prompt to a generative artificial intelligence module for determining output data for the input data, in particular a generative artificial intelligence module as claimed in claim 4.
